# EUROPÄISCHE PATENTSCHRIFT

(11) **EP 1 993 697 B1**
(45) Veröffentlichungstag und Bekanntmachung des Hinweises auf die Patenterteilung: **19.09.2012**
(21) Anmeldenummer: 06818977.8
(22) Anmeldetag: 05.12.2006
(51) Int. Cl.: B01D 27/08, B01D 29/23

(54) **FILTERELEMENT**
FILTER ELEMENT
ELEMENT DE FILTRATION

(30) Priorität: 15.03.2006 DE 102006011842
(43) Veröffentlichungstag der Anmeldung: 26.11.2008
(73) Patentinhaber: HYDAC FILTERTECHNIK GMBH, 66280 Sulzbach (DE)
(72) Erfinder: SAKRASCHINSKY, Michael, 66386 St. Ingbert (DE)
(74) Vertreter: Bartels, Martin Erich Arthur
(86) Internationale Anmeldenummer: PCT/EP2006/011627
(87) Internationale Veröffentlichungsnummer: WO 2007/104349

(56) Entgegenhaltungen:
- WO-A-01/97949
- WO-A-02/089948
- DE-A1- 10 026 536
- DE-A1- 10 348 301

## Beschreibung

Die Erfindung betrifft ein Filterelement mit einem einen kreiszylinderförmigen Innenraum begrenzenden Filtertopf mit einem einen Fluidanschluss aufweisenden Bodenteil, einem hierzu entgegengesetzten Deckelteil, einem an der Innenwand des Filtertopfes anliegenden Filtermedium in Form eines den Zentralbereich des Innenraumes freilassenden hohlzylinderförmigen Körpers sowie mit Fluiddurchlässen in der das Filtermedium umgebenden Wand des Filtertopfes.

Filterelemente dieser Art sind handelsüblich. Zur Benutzung bei zugeordneten Filtereinrichtungen werden derartige Filterelemente nach Öffnen oder Abnehmen eines Gehäusedeckels in ein Filtergehäuse eingesteckt, dessen Gehäuseboden einen Sitz für den am Bodenteil des Filterelementes befindlichen Fluidanschluss aufweist, über den das zu filtrierende Fluid in den vom Filtermedium umgebenen inneren Hohlraum des Filterelementes eintritt. Für das nach Durchströmen des Filtermediums an der Außenseite des Filtertopfes austretende, gereinigte Fluid weist das Filtergehäuse, vorzugsweise ebenfalls an seinem Gehäuseboden, einen Fluidauslass auf.

Da derartige Filterelemente nach Ablauf einer entsprechenden Betriebsdauer gegen ein unverbrauchtes Filterelement ausgetauscht werden müssen, ist eine Bauweise anzustreben, die sowohl eine einfache und kostengünstige Herstellung als auch eine einfache Handhabung ermöglicht, dass also Aus- und Einbau einfach und zeitsparend möglich sind.

Ein Filterelement der eingangs genannten Art ist aus DE 103 48 301 A1 bekannt geworden. Das bekannte Filterelement weist eine einen Fluidraum umfassende Filtermatte auf, die sich zwischen zwei Endkappen des Filterelements erstreckt, wobei in Abhängigkeit der Durchströmungsrichtung eines zu filtrierenden Fluids die Filtermatte nach außen und/oder nach innen von einem Stützrohr umgeben ist. Das Stützrohr ist durch Stapelung aus einzelnen Käfigringsegmenten gebildet, die mittels einer Rastverbindung über Rastnasen untereinander verbindbar sind, wobei die Rastverbindungen derart erstellt sind, dass Fluiddurchtrittsstellen gebildet werden.

DE 100 26 536 A1 betrifft einen Filter zur Reinigung eines Fluids, insbesondere von ÖI. Der Filter umfasst ein Filtergehäuse mit einem Fluideinlass und einem Fluidauslass und ein Filterelement. Das Filterelement trennt den Fluideinlass dichtend von dem Fluidauslass und weist ein Filtermedium, eine erste Endscheibe und eine zweite Endscheibe und einen Stützkörper auf. Der Stützkörper ist mit einem Filmscharnier an die erste Endscheibe angeformt und zwischen der ersten Endscheibe und der zweiten Endscheibe angeordnet. Die Endscheibe kann ebenfalls mit einem Filmscharnier an den Stützkörper angeformt sein. Das Filtermedium stützt sich bei einem von innen nach außen durchströmten Filter am Stützkörper ab.

Im Hinblick hierauf stellt sich die Erfindung die Aufgabe, ein Filterelement zur Verfügung zu stellen, das den vorstehend erwähnten Anforderungen in besonderem Maße genügt.

Erfindungsgemäß ist diese Aufgabe durch ein Filterelement gelöst, das die Merkmale des Patentanspruches 1 in seiner Gesamtheit aufweist.

Dadurch, dass gemäß dem kennzeichnenden Teil des Anspruches 1 ein Ringkörper als Verbindungsteil vorgesehen ist, das einen Verbund zwischen Deckelteil und Filtertopf mit Hilfe einer Schnappverbindung ermöglicht, ergibt sich der Vorteil des besonders rationellen und einfachen Zusammenbaus der Bauteile des Filterelementes, was eine kostengünstige Herstellung ermöglicht.

Bei besonders vorteilhaften Ausführungsbeispielen ist das Deckelteil an seinem Umfang derart stufenartig gestaltet, dass bei hergestellter Schnappverbindung mit dem Ringkörper dessen Endteil zusammen mit einer betreffenden Abstufung am Deckelteil eine Ringnut begrenzt, die einen Sitz für einen O-Ring bildet, mit dem das Deckelteil gegenüber einem den Filtertopf aufnehmenden Filtergehäuse abgedichtet wird.

Diese Gestaltung vereinfacht aufgrund der Doppelfunktion des Ringkörpers, der als Verbindungsglied zwischen Deckelteil und Filtertopf fungiert und gleichzeitig auch Teil der Außenabdichtung des Deckelteiles bildet, die Herstellung in besonders starkem Maße.

Bei Filterelementen der vorliegenden Gattung ist in üblicher. Weise zumindest an demjenigen Endbereich des Filtermediums, das dem Deckelteil benachbart ist, eine Verleimung vorgesehen, wobei das Klebstoffmaterial als Bindemittel sowohl innerhalb des Filtermediums vorhanden sein kann als auch einen Verbund mit dem Deckelteil bilden kann. Bei einem vorteilhaft ten Ausführungsbeispiel der Erfindung ist im Hinblick auf eine derartige, endseitige Verleimung der Innendurchmesser des Mantelteiles des Ringkörpers geringfügig größer gewählt als der Außendurchmesser des vom Mantelteil umgebenen Bereiches des Filtertopfes. In dem für die Verleimung vorgesehenen Endabschnitt des Filtertopfes wird zwischen dessen Außenseite und der Innenseite des Mantelteiles der Ringkörpers somit ein für die Aufnahme von Klebstoffmaterial zur Verfügung stehender Ringspalt gebildet.

Hinsichtlich der Verleimung kann die Anordnung auch so getroffen sein, dass das Deckelteil an seiner dem Innenraum des Filtertopfes zugewandten Innenseite zumindest eine nutartige Vertiefung für die Aufnahme von Klebstoffmaterial aufweist, das zur Bildung einer Verleimung in dem dem Dekkelteil benachbarten Endbereich des Filtermediums dient.

Vorzugsweise sind hierfür zwei seitlich des Zentralbereiches des Deckelteiles im Abstand voneinander parallel verlaufende nutartige Vertiefungen vorgesehen, die einen schwalbenschanzartigen Querschnitt besitzen, so dass die jeweilige Nut an ihrem Grund erweitert ist.

Gegenstand der Erfindung ist auch eine Filtereinrichtung, die ein erfindungsgemäßes Filterelement umfasst und die Merkmale des Patentanspruches 8 in seiner Gesamtheit aufweist.

Nachstehend ist die Erfindung anhand der Zeichnung im Einzelnen erläutert. Es zeigen:
- Fig. 1 und 2 eine Seitenansicht bzw. perspektivische Schrägansicht eines Ausführungsbeispieles des erfindungsgemäßen Filterelementes;
- Fig. 3 einen Längsschnitt des Ausführungsbeispieles des Filterelementes entsprechend der Schnittlinie III-III von Fig. 1, wobei das Filterelement in ein ebenfalls im Längsschnitt und stark schematisch vereinfacht gezeichnetes Filtergehäuse eingesetzt ist;
- Fig. 4 eine in größerem Maßstab in perspektivischer Schrägansicht und auseinander gezogen gezeichnete Darstellung lediglich eines Deckelteiles und eines Ringkörpers, die Bestandteile des Ausführungsbeispieles des Filterelementes bilden, und
- Fig. 5 einen in noch größerem Maßstab gezeichneten Ausschnitt des in Fig. 3 mit V bezeichneten Bereiches.

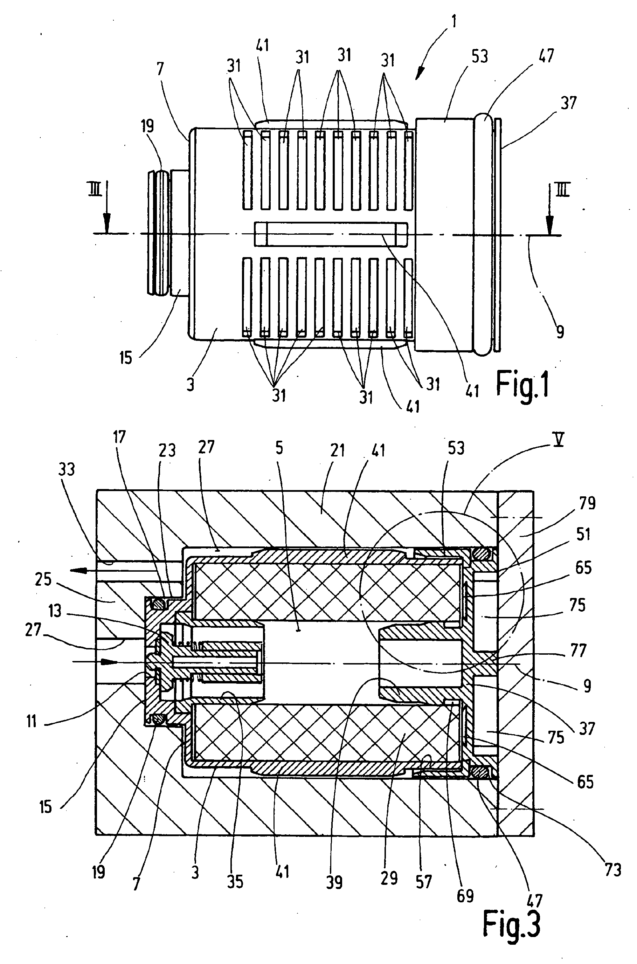

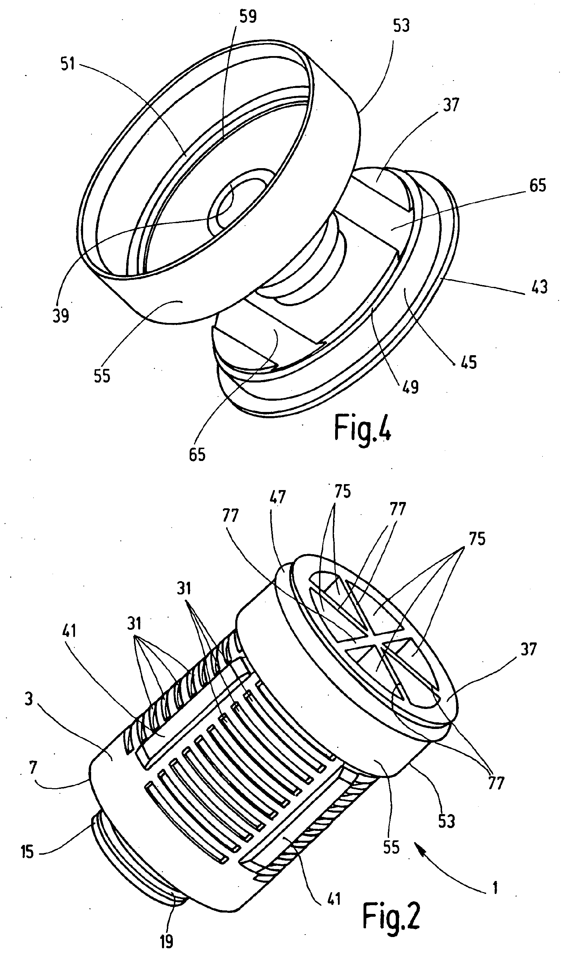

Das in Fig. 1 und 2 als Ganzes mit 1 bezeichnete Filterelement weist einen aus einem Kunststoffmaterial gefertigten Filtertopf 3 auf, der für die Aufnahme eines Filtermediums 29 einen kreiszylinderförmigen Innenraum 5 begrenzt. Dieser ist am bodenseitigen Ende durch ein Bodenteil 7 abgeschlossen in dessen auf die Längsachse 9 bezogenem Zentralbereich ein Fluidanschluss 11 angeordnet ist. An diesem ist eine durch Fluiddruck öffnende Ventilanordnung 13 üblicher Art vorgesehen. Ein am Bodenteil 7 konzentrisch zur Längsachse 9 vorspringender, den Fluidanschluss 11 umgebender Ansatz 15 weist eine umfängliche Ringnut 17 auf, in der ein O-Ring 19 sitzt. Wenn das Filterelement 1, wie in Fig. 3 gezeigt, in ein zugehöriges Filtergehäuse 21 eingesteckt ist und sich der Einsatz 15 am Bodenteil 7 des Filterelementes 1 in einem Sitz 23 des Gehäusebodens 25 des Filtergehäuses 21 befindet, dann dichtet der O-Ring 19 den Fluidanschluss 11 sowie einen mit diesem in Verbindung befindlichen Fluideinlass 27 am Gehäuseboden 25 gegenüber dem Raum 27 (Fig. 3) ab, der bei in das Filtergehäuse 21 eingestecktem Filterelement 1 sich an der Außenseite von dessen Filtertopf 3 befindet und beim Filtrationsvorgang die Reinseite bildet. Mit anderen Worten gesagt, stellt der Innenraum 5 zu dem das zu filtrierende Fluid über den Fluidanschluss 11 zuführbar ist, beim Filtrationsvorgang die Schmutzseite dar, von der aus das zu filtrierende Fluid durch das Filtermedium 29 von innen nach außen hindurch tritt und durch Spaltöffnungen 31 (in den Figuren nicht sämtliche beziffert) des Filtertopfes 3 zu dem die Reinseite bildenden Raum 27 gelangt. Ein mit dem Raum 27 in Verbindung stehender Fluidauslass im Gehäuseboden 25 des Filtergehäuses 21 ist in Fig. 3 mit 33 bezeichnet.

Wie aus Fig. 3 zu entnehmen, befindet sich die Ventilanordnung 13 am Bodenteil 7 des Filtertopfes 3 innerhalb eines zur Längsachse 9 konzentrischen Zentrierkörpers 35, der vom in den Innenraum 5 eintretenden Fluid durchströmbar ist. Das Filtermedium 29 in Form eines mit seiner Außenseite an der Innenwand des Filtertopfes 3 anliegenden hohlzylinderförmigen Körpers umgibt in seinem dem Bodenteil 7 benachbarten Endbereich den Zentrierkörper 35, der die lichte Weite des Innenraumes 5 definiert: An dem dem Bodenteil 7 entgegengesetzten Ende ist der Filtertopf 3 durch ein Deckelteil 37 abgeschlossen, das einen zur Längsachse 9 konzentrischen Zentrierzapfen 39 aufweist, der in ähnlicher Weise wie der bodenseitige Zentrierkörper 35 in den Innenraum 5 vorspringt und in ähnlicher Weise das Filtermedium 29 zentriert und im deckelseitigen Bereich die lichte Weite des Innenraumes 5 definiert.

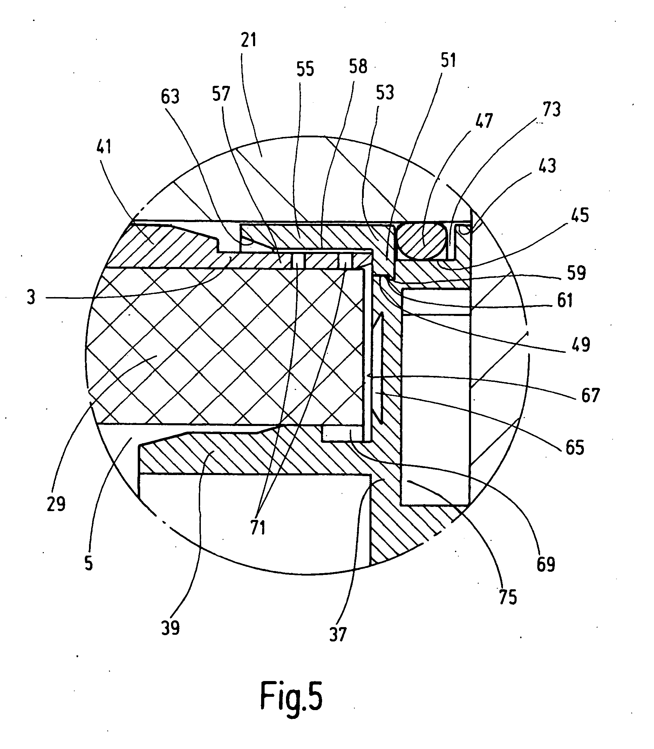

Wie am besten aus Fig. 3 und 5 entnehmbar ist, bilden Längsrippen 41, die zwischen den Schlitzöffnungen 31 an der Außenseite des Filtertopfes 3 vorstehend ausgebildet sind, Abstandhalter, die bei in das Filtergehäuse 21 eingestecktem Filterelement 1 die Außenseite des Filtertopfes 3 im Abstand von der Innenwand der Kammer des Filtergehäuses 21 halten, so dass an der Außenseite des Filtertopfes 3 der Raum 27 für das gereinigte Fluid zur Verfügung steht.

Aus Fig. 3 und insbesondere aus Fig. 5 sind nähere Einzelheiten des Dekkelteiles 37 entnehmbar. Dieses ist außenumfangsseitig abgestuft, wobei eine erste Stufe 43 am äußeren Ende den größten Radialabstand von der Längsachse 9 hat und am Deckelteil 37 den gleichen Außendurchmesser definiert wie die Längsrippen 41 am Filtertopf 3. Die sich anschließende zweite Stufe 45 ist um einen Radialabstand nach innen versetzt. Die axiale Abmessung dieser zweiten Stufe 45 ist an die Größe eines auf dieser Stufe 45 sitzenden O-Ringes 47 angepaßt, wobei der Radialabstand zwischen erster Stufe 43 und zweiter Stufe 45 so gewählt ist; dass der O-Ring 47 die in den Fig. 3 und 5 gezeigte, leicht zusammengedrückte Form besitzt, wenn er mit der Innenwand eines zugeordneten Filtergehäuses 21 in Dichtverbindung ist, wie es in Fig. 3 und 5 gezeigt ist. Die sich weiter innen als nächstes anschließende dritte Stufe 49 ist wiederum radial nach innen versetzt und bildet einen Sitz für das Endteil 51 eines Ringkörpers 53. Dieser aus einem Kunststoffwerkstoff gefertigte Ringkörper 53 weist ein hohlzylinderartiges Mantelteil 55 auf, das sich entlang eines Endabschnittes 57 des Filtertopfes 3 erstreckt, wobei der Innendurchmesser des Mantelteiles 55 etwas größer gewählt ist als der Außendurchmesser des Endabschnittes 57, so dass zwischen diesen ein Ringspalt 58 gebildet wird, siehe Fig. 5. Das Endteil 51 des Ringkörpers 53 ist radial nach innen gezogen, so dass es den Endrand des Filtertopfes 3 übergreift und mit der radial innen liegenden Ringfläche auf der dritten Stufe 49 des Deckelteiles 37 sitzt. Wie Fig. 4 und 5 zeigen, befindet sich an der radial innen liegenden Ringfläche des Endteiles 51 eine radial vorstehende Ringrippe 59, die unter Bildung einer Schnappverbindung in eine Ringrille 61 in der dritten Stufe 49 des Deckelteiles 37 einschnappt.

Wie ebenfalls am besten aus Fig. 5 zu ersehen, weist der Ringkörper 53 an seinem vom Endteil 51 abgekehrten Ende eine den Ringspalt 58 erweiternde Abschrägung 63 auf. Der Ringspalt 58 bildet zusammen mit der Abschrägung 63 einen Aufnahmeraum für ein Klebstoffmaterial, das Teil einer im Endabschnitt 57 vorgesehen Verleimung bilden kann. Des weiteren befinden sich in der dem Filtermedium 29 zugewandten Seite des Deckelteiles 37 nutartige Vertiefungen 65, die sich zu beiden Seiten des Zentrierzapfens 39 parallel zueinander erstrecken und einen schwalbenschwanzförmigen Querschnitt besitzen, so dass sich eine Erweiterung am Nutgrund ergibt. Diese Vertiefungen bilden zusammen mit einem Freiraum 67, der an das Filtermedium 69 angrenzt, sowie mit einem Ringraum 69 am Fuß des Zentrierzapfens 39 Aufnahmeräume für Klebstoffmaterial für die Bildung der zwischen Deckelteil 37 und Filterelement 29, Ringkörper 53 und Filtertopf 3 befindlichen Verleimung. Durchtrittsöffnungen 71 im Endabschnitt 57 des Filtertopfes 3 können einen Durchgang für Klebstoffmaterial zwischen Innenseite des Filtertopfes 3 und dem Ringspalt 58 bilden.

Die Schnappverbindung zwischen Ringkörper 53 und Deckelteil 37 mittels Ringrippe 59 und Rille 61 ermöglicht eine einfache und bequeme Fixierung der Bauelemente, beispielsweise vorausgehend zur endgültigen Festlegung und Verleimung. Dadurch, dass das Endteil 51 des Ringkörpers 53 die zweite Stufe 45 am Umfang des Deckelteiles 37 axial begrenzt, bildet der Ringkörper 53 nicht nur ein Verbindungsglied zwischen Deckelteil 37 und Filtertopf 3 sondern definiert zusammen mit der Stufe 45 gleichzeitig die Ringnut 73 für den O-Ring 47.

Wie am besten aus Fig. 2 zu ersehen ist, befinden sich an der Außenseite des Deckelteiles 37 kreissektorartige Ausnehmungen 75, zwischen denen sich speichenartige Rippen 77 befinden, mit denen das Deckelteil am entsprechenden Gehäusedeckel 79 eines zugeordneten Filtergehäuses 21 anliegt.

Fig. 3 zeigt, dass der geschlossene Gehäusedeckel 79 des Filtergehäuses 21, wenn das Filterelement 1 in dieses eingesteckt ist und sein Fluidanschluss 11 sich im Sitz 17 im Boden 25 des Filtergehäuses 21 befindet, mit seiner Innenseite an den Rippen 77 an der Außenseite des Deckelteiles 37 anliegt. Das Filterelement 1 ist dadurch innerhalb des Filtergehäuses 21 lagegesichert festgelegt.

## Patentansprüche

1. Filterelement (1) mit einem einen kreiszylinderförmigen Innenraum (5) begrenzenden Filtertopf (3) mit einem einen Fluidanschluss (11) aufweisenden Bodenteil (7), einem hierzu entgegengesetzten Deckelteil (37), einem an der Innenwand des Filtertopfes (3) anliegenden Filtermedium (29) in Form eines den Zentralbereich des Innenraumes (5) freilassenden hohlzylinderförmigen Körpers sowie mit Fluiddurchlässen (31) in der das Filtermedium (29) umgebenden Wand des Filtertopfes (3), **dadurch gekennzeichnet, dass** ein als Verbindungsteil zwischen Filtertopf (3) und Deckelteil (37) vorgesehener Ringkörper (53) mit einem sich entlang des Endabschnittes (57) des Filtertopfes (3) axial erstreckenden Mantelteil (55) und einem sich radial nach innen erstreckenden, den Rand des Filtertopfes (3) und den Rand des Deckelteiles (37) übergreifenden Endteil (51) vorgesehen ist und dass am Endteil (51) des Ringkörpers (53) sowie am Deckelteil (37) miteinander zusammenwirkende Rastmittel (59, 61) zur Bildung einer Schnappverbindung zwischen Endteil (51) und Deckelteil (37) vorhanden sind.

2. Filterelement nach Anspruch 1, **dadurch gekennzeichnet, dass** zur Bildung der Schnappverbindung das Endteil (51) eine radial vorstehende ringförmige Rippe (59) und das Deckelteil (37) eine an ihm umfangsseitig ausgebildete Ringrille (61) aufweisen.

3. Filterelement nach Anspruch 2, **dadurch gekennzeichnet, dass** das Dekkelteil (37) an seinem Umfang derart stufenartig gestaltet ist, dass, ausgehend vom äußeren Ende des Deckelteils (37), eine erste Stufe (43), deren Außendurchmesser dem Außendurchmesser des Mantelteiles (55) des Ringkörpers (53) entspricht, eine radial weiter innenliegende zweite Stufe (45) sowie eine demgegenüber noch weiter radial nach innen versetzte dritte Stufe (49) gebildet werden und dass in diese dritte Stufe (49) die für die Schnappverbindung mit dem Ringkörper (53) vorgesehene Ringrille (61) eingearbeitet ist.

4. Filterelement nach Anspruch 3, **dadurch gekennzeichnet, dass** Stufenhöhe und axiale Abmessung der zweiten Stufe (45) so bemessen sind, dass bei hergestellter Schnappverbindung mit dem Ringkörper (53) dessen Endteil (51) zusammen mit der zweiten Stufe (45) eine Ringnut (73) als Sitz für einen O-Ring (47) bildet, um das Deckelteil (37) gegenüber einem den Filtertopf (3) aufnehmenden Filtergehäuse (21) abzudichtenden.

5. Filterelement nach einem der Ansprüche 1 bis 4, **dadurch gekennzeichnet, dass** der Innendurchmesser des Mantelteiles (55) geringfügig größer ist als der Außendurchmesser des vom Mantelteil (55) umgebenen Bereiches (57) des Filtertopfes (3).

6. Filterelement nach einem der Ansprüche 1 bis 5, **dadurch gekennzeichnet, dass** das Deckelteil (37) an seiner dem Innenraum (5) des Filtertopfes (3) zugewandten Innenseite zumindest eine nutartige Vertiefung (65) für die Aufnahme von Klebstoffmaterial zur Bildung einer Verleimung in dem dem Deckelteil (37) benachbarten Endbereich des Filtermediums (29) aufweist.

7. Filterelement nach Anspruch 6, **dadurch gekennzeichnet, dass** zwei seitlich des Zentralbereiches des Deckelteiles (37) im Abstand voneinander parallel verlaufende nutartige Vertiefungen (65) vorgesehen sind, die zur Bildung eines erweiterten Grundes der Vertiefungen (65) einen schwalbenschwanzartigen Querschnitt besitzen.

8. Filtereinrichtung mit einem Filtergehäuse (21) und einem Filterelelement (1),
- wobei das Filtergehäuse (21) eine innere Gehäusekammer (27) aufweist, die sich entlang einer Längsachse (9) zwischen einem Gehäuseboden (25) und einem Gehäusedeckel (79) erstreckt und in welche das Filterelement (1) aufgenommen ist,
- wobei im Filtergehäuse (21) ein Fluideinlass (27) und ein Fluidauslass (33) vorhanden sind und am Fluideinlass (27) des Filtergehäuses (21) ein Sitz (23) für einen am Filterelement (1) befindlichen Fluidanschluss (11) vorhanden ist,
- wobei das vom Gehäuseboden (25) entfernte Ende der Gehäusekammer (27) vom Gehäuseboden (25) in Axialrichtung gleich weit entfernt ist wie die Außenseite des Deckelteiles (37) des in der Gehäusekammer (27) aufgenommenen und mit seinem Fluidanschluss (11) in den Sitz (23) des Filtergehäuses (21) eingesteckten Filterelementes (1),
- **dadurch gekennzeichnet, dass** der Fluideinlass (27) und der Fluidauslass (33) am Gehäuseboden (25) vorhanden sind,
- dass der Fluidanschluss (11) sich am Bodenteil (7) des Filterelements (1) befindet, und
- dass ein Filterelement (1) gemäß einem der Ansprüche 1 bis 7 vorgesehen ist.

## Claims

1. A filter element (1) having a filter pot (3) which delineates a circular cylindrical interior (5) with a bottom part (7) which has a fluid port (11), a cover part (37) opposite the bottom part, a filter medium (29) which adjoins the inside wall of the filter pot (3) in the form of a hollow cylindrical body which leaves the central region of the interior (5) free, and having fluid passages (31) in the wall of the filter pot (3) which encompasses the filter medium (29), **characterised in that** an annular body (53) which is provided as the connecting part between the filter pot (3) and the cover part (37) is provided with a jacket part (55) which extends axially along the end section (57) of the filter pot (3) and with an end part (51) which overlaps the edge of the filter pot (3) and the edge of the cover part (37) and which extends radially to the inside, and that on the end part (51) of the annular body (53) and on the cover part (37) there are catch means (59, 61) which interact with one another to form a snap connection between the end part (51) and the cover part (37).

2. The filter element according to Claim 1, **characterised in that** the end part (51) has a radially projecting, annular rib (59) and the cover part (37) has an annular groove (61) formed on its peripheral side to form the snap connection.

3. The filter element according to Claim 2, **characterised in that** the cover part (37) on its periphery is made stepped such that proceeding from the outer end of the cover part (37) a first step (43), the outside diameter of which corresponds to the outside diameter of the jacket part (55) of the ring body (53), a second step (45) which is radially further inside, and a third step (49) which is offset radially still further to the inside are formed, and that the annular groove (61) which is intended for the snap connection to the ring body (53) is machined into this third step (49).

4. The filter element according to Claim 3, **characterised in that** the height of the step and the axial dimension of the second step (45) are such that when the snap connection to the annular body (53) is established, the latter's end part (51) together with the second step (45) forms an annular groove (73) as a seat for an O-ring (47) in order to seal the cover part (37) relative to a filter housing (21) which holds the filter pot (3).

5. The filter element according to any of Claims 1 to 4, **characterised in that** the inside diameter of the jacket part (55) is slightly larger than the outside diameter of the region (57) of the filter pot (3) which is surrounded by the jacket part (55).

6. The filter element according to any of Claims 1 to 5, **characterised in that** the cover part (37) on its inner side facing the interior (5) of the filter pot (3) has at least one groove-like depression (65) for holding adhesive material for forming an adhesive bond in the end region of the filter medium (29) adjacent to the cover part (37).

7. The filter element according to Claim 6, **characterised in that** there are two groove-like depressions (65) which run parallel laterally to the central region of the cover part (37) a distance apart from one another and which have a dovetail-like cross-section to form a widened base of the depressions (65).

8. A filter means comprising a filter housing (21) and a filter element (1),
- the filter housing (21) having an inner housing chamber (27) which extends along a longitudinal axis (9) between a housing bottom (25) and a housing cover (79) and in which the filter element (1) is held,
- there being in the filter housing (21) a fluid inlet (27) and a fluid outlet (33), and there being on the fluid inlet (27) of the filter housing (21) a seat (23) for a fluid port (11) located on the filter element (1),
- the end of the housing chamber (27) which is located a distance away from the housing bottom (25) being the same distance away from the housing bottom (25) in the axial direction as the outside of the cover part (37) of the filter element (1) held in the housing chamber (27) and which has been inserted into the seat (23) of the filter housing (21) with its fluid port (11),
- **characterised in that** the fluid inlet (27) and the fluid outlet (33) are provided on the housing bottom (25),
- that the fluid port (11) is located on the bottom part (7) of the filter element (1), and
- that a filter element (1) according to any of Claims 1 to 7 is provided.

## Revendications

1. Elément de filtration (1) comprenant un pot (3) de filtre délimitant un espace (5) intérieur en forme de cylindre de section circulaire et ayant une partie (7) de fond comportant un raccord (11) pour du fluide, une partie (37) de couvercle qui y est opposée, un milieu (29) filtrant s'appliquant à la paroi intérieure du pot (3) de filtre sous la forme d'un corps en forme de cylindre creux dégageant la zone centrale de l'espace (5) intérieur ainsi que des traversées (31) pour du fluide dans la paroi du pot (3) de filtre entourant le milieu (29) filtrant, **caractérisé en ce qu'**il est prévu comme partie de liaison un corps (53) annulaire prévu entre le pot (3) de filtre et la partie (37) de couvercle et ayant une partie (55) de surface latérale s'étendant axialement le long du segment (57) d'extrémité du pot (3) de filtre et une partie (51) d'extrémité s'étendant radialement vers l'intérieur et enjambant le bord du pot (3) de filtre et le bord de la partie (37) de couvercle et **en ce qu'**à la partie (51) d'extrémité du corps (53) annulaire ainsi qu'à la partie (37) de couvercle, il y a des moyens (59, 61) d'encliquetage coopérant les uns avec les autres, pour la formation d'une liaison à déclic entre la partie (51) d'extrémité et la partie (37) de couvercle.

2. Elément de filtration suivant la revendication 1, **caractérisé en ce que**, pour la formation de la liaison à déclic, la partie (51) d'extrémité a une nervure (59) annulaire en saillie radialement et la partie (37) de couvercle a une rainure (61) annulaire constituée sur son côté de pourtour.

3. Elément de filtration suivant la revendication 2, **caractérisé en ce que** la partie (37) de couvercle est conformée sur son pourtour en gradins, de manière à ce que, en partant de l'extrémité extérieure de la partie (37) de couvercle, un premier gradin (43) dont le diamètre extérieur correspond au diamètre extérieur de la partie (55) de surface latérale du corps (53) annulaire, un deuxième gradin (45) plus à l'intérieur radialement ainsi qu'un troisième gradin (49) décalé encore plus radialement vers l'intérieur par rapport à celui-ci soient formés et que, dans ce troisième gradin (49), la rainure (61) annulaire prévue pour la liaison à déclic avec le corps (53) annulaire soit ménagée.

4. Elément de filtration suivant la revendication 3, **caractérisé en ce que** la hauteur et la dimension axiale du deuxième gradin (45) sont telles que, lorsque la liaison à déclic est ménagée avec le corps (53) annulaire, sa partie (51) d'extrémité forme ensemble avec le deuxième gradin (45) une rainure (73) annulaire servant de siège pour un joint (47) torique, afin de rendre étanche la partie (37) de couvercle par rapport à une boîte (21) de filtre recevant le pot (3) de filtre.

5. Elément de filtration suivant l'une des revendications 1 à 4, **caractérisé en ce que** le diamètre intérieur de la partie (55) de surface latérale est légèrement plus grand que le diamètre extérieur de la zone (57) du pot (3) de filtre entourant la partie (55) de surface latérale.

6. Elément de filtration suivant l'une des revendications 1 à 5, **caractérisé en ce que** la partie (37) de couvercle a, sur sa face intérieure tournée vers l'espace (5) intérieur du pot (3) de filtre, au moins une cavité (65) en forme de rainure, pour la réception de matière adhésive afin de former un encollage dans la zone d'extrémité, voisine de la partie (37) de couvercle, du milieu (29) filtrant.

7. Elément de filtration suivant la revendication 6, **caractérisé en ce qu'**il est prévu deux cavités (65) en forme de rainure s'étendant latéralement à la zone centrale de la partie (37) de couvercle parallèlement en étant à distance l'une de l'autre, qui ont, pour la formation d'un fond élargi des cavités (65), une section transversale de type à queue d'aronde.

8. Dispositif de filtration ayant une boîte (21) de filtre et un élément (1) de filtration,
- dans lequel la boîte (21) de filtre a une chambre (27) intérieure de boîte, qui s'étend le long d'un axe (9) longitudinal entre un fond (25) de boîte et un couvercle (79) de boîte et dans lequel est logé l'élément (1) de filtration,
- dans lequel il y a, dans la boîte (21) de filtre, une entrée (27) pour du fluide et une sortie (33) pour du fluide et il y a, sur l'entrée (27) pour du fluide de la boîte (21) de filtre, un siège (23) pour un raccord (11) pour du fluide se trouvant sur l'élément (1) de filtration,
- dans lequel l'extrémité, éloignée du fond (25) de la boîte, de la chambre (27) de la boîte est éloignée du fond (25) de la boîte suivant une même distance dans la direction axiale que la face extérieure de la partie (37) du couvercle de l'élément (1) de filtration logé dans la chambre (27) de la boîte et enfilé par son raccord (11) pour du fluide dans le siège (23) de la boîte (21) de filtre,
- **caractérisé en ce que** l'entrée (27) pour du fluide et la sortie (33) pour du fluide se trouvent sur le fond (25) de la boîte,
- **en ce que** le raccord (11) pour du fluide se trouve sur la partie (7) de fond de l'élément (1) de filtration, et
- **en ce qu'**il est prévu un élément (1) de filtration suivant l'une des revendications 1 à 7.
